# EUROPEAN PATENT APPLICATION

(11) **EP 4 797 856 A1**
(43) Date of publication of application: **26.08.2026**
(21) Application number: 24881080.6
(22) Date of filing: 01.07.2024
(51) Int. Cl.: H04W 74/08

(54) **RANDOM ACCESS METHOD, COMMUNICATION NODE, AND STORAGE MEDIUM**

(30) Priority: 24.10.2023 CN 202311390824
(71) Applicant: ZTE CORPORATION, Shenzhen, Guangdong 518057 (CN)
(72) Inventor: LU, Zhaohua, Shenzhen, Guangdong 518057 (CN); LIU, Kun, Shenzhen, Guangdong 518057 (CN); CAO, Hua, Shenzhen, Guangdong 518057 (CN)
(74) Representative: Aipex B.V.
(86) International application number: PCT/CN2024/102954
(87) International publication number: WO 2025/086705

(57) **Abstract**

Provided are a random access method, a communication node, and a storage medium. The method includes: performing at least one of a first random access procedure or a second random access procedure; where the first random access procedure includes a first type of message set, the first type of message set includes at least one first type of message, and the at least one first type of message adopts a first processing manner; and the second random access procedure includes a second type of message set, the second type of message set includes at least one second type of message, and the at least one second type of message adopts the first processing manner or a second processing manner.

## Description

### CROSS-REFERENCE TO RELATED APPLICATION(S)

This application claims priority to Chinese Patent Application No. 202311390824.X, titled "RANDOM ACCESS METHOD, COMMUNICATION NODE, AND STORAGE MEDIUM", filed with the China National Intellectual Property Administration (CNIPA) on Oct. 24, 2023, the disclosure of which is incorporated herein by reference in its entirety.

### TECHNICAL FIELD

The present application relates to the field of communication technology, for example, a random access method, a communication node, and a storage medium.

### BACKGROUND

In the 5th Generation Mobile Communication System (5G) New Radio (NR), during the random access process, the terminal can only select the Physical Random Access Channel (PRACH) resource corresponding to one beam direction to send the random access signal and start the random access process. This severely limits the performance of the terminal devices. When PRACH resources are limited or an excessive number of terminal devices select the same beam direction, random access signal sequences in the same beam direction collide, causing the terminal devices to fail to access the system or increasing the access latency of the terminal devices.

In typical application scenarios of the 6th Generation Mobile Communication System (6G) such as smart cities, smart transportation, and smart homes, a large number of terminal devices are present, and these terminal devices have vastly different capabilities, leading to increased communication requirements for extremely low latency, extremely high reliability, ultra-high bandwidth, and massive access. In the 6G era, the types of terminal devices accessing the system become highly diverse. Adopting the NR-based access scheme greatly reduces the success rate of terminal devices accessing the communication system, leading to a significant increase in access latency, resulting in huge system resource overhead for random access, and seriously affecting the spectrum efficiency of the communication system.

### SUMMARY

The present application provides a random access method, a communication node, and a storage medium.

Embodiments of the present application provide a random access method. The method includes at least one of a first random access procedure or a second random access procedure; where the first random access procedure includes a first type of message set, the first type of message set includes at least one first type of message, and the at least one first type of message adopts a first processing manner; and the second random access procedure includes a second type of message set, the second type of message set includes at least one second type of message, and the at least one second type of message adopts the first processing manner or a second processing manner.

Embodiments of the present application further provide a communication node. The communication node includes a memory, a processor, and a computer program stored in the memory and executable by the processor. When executed by the processor, the program causes the processor to perform the random access method.

Embodiments of the present application further provide a storage medium. The computer-readable storage medium stores a computer program which, when executed by a processor, causes the processor to perform the random access method.

The preceding embodiments and other aspects of the present application and implementations thereof are described in more detail in the brief description of drawings, detailed description, and claims.

### BRIEF DESCRIPTION OF DRAWINGS

FIG. 1 is a flowchart of a random access method according to an embodiment.
FIG. 2 is a structural diagram of a random access apparatus according to an embodiment.
FIG. 3 is a hardware structural diagram of a communication node according to an embodiment.

### DETAILED DESCRIPTION

To make the objects, technical solutions, and advantages of the present application clearer, the embodiments of the present application are described in detail below in conjunction with the drawings. It is to be noted that if not in collision, the embodiments of the present application and features therein may be combined with each other in any manner.

The steps illustrated in the flowcharts among the drawings may be performed by, for example, a computer system capable of executing a set of computer-executable instructions. Moreover, although logical sequences are illustrated in the flowcharts, in some cases, the illustrated or described steps may be performed in sequences different from those described herein.

The large-scale commercial deployment of the 5G NR is accelerating the transformation of the economy and society toward digitalization, networking, and intelligence, driving networks into a new era of the Internet of Everything. The rapidly emerging application demands in areas such as smart cities, smart transportation, and smart industrial production have continuously strengthened the development trend toward differentiated network device capabilities, diversified network functions, and intelligent network management and control, further promoting the advent of the 6G for the Internet of Everything. In typical 6G application scenarios such as smart cities, smart transportation, and smart homes, a large number of intelligent automation devices with highly differentiated capabilities are present. The communication requirements of the devices for extremely low latency, extremely high reliability, ultra-high bandwidth, and massive access are becoming increasingly stringent. Intelligent automation applications place high precision and high resolution requirements on sensing capabilities. On the one hand, the surge in the number of wireless communication and sensing devices has exacerbated the contradiction between the unbounded service demands and the limited wireless resources and computing power. On the other hand, the realization of the 6G vision requires closed-loop information flow processing, including the acquisition of environmental sensing information, information interaction and sharing, intelligent information processing, and the hierarchical distribution of control information (including control information for communication networks and control instructions for application execution devices). Existing wireless network architectures and the related art are no longer sufficient to satisfy the ever-emerging application requirements of the post-5G/6G era. There is an urgent need to develop new network architectures and enabling technologies that enable efficient resource utilization and intelligent adaptation to differentiated applications.

The rise of artificial intelligence (AI) technologies, represented by deep learning, reinforcement learning, and distributed learning, has had an extensive and profound influence on various fields such as communication network optimization, intelligent sensing, and control applications, greatly promoting the deep integration of the communication, sensing, and computing fields. Based on this, if the 6G, empowered by intelligent computing technologies, achieves the integration and symbiosis of communication and sensing capabilities, the 6G networks are endowed with the ability to intelligently sense the physical world and mirror the digital world anytime and anywhere. The massive number of new intelligent terminals connected will rely on continuously enhanced computing power for learning, communication, cooperation, and contention, thereby enabling self-learning, self-operation, and self-maintenance of the network and ultimately achieving the vision of a 6G integrated network of communication, sensing, and computing.

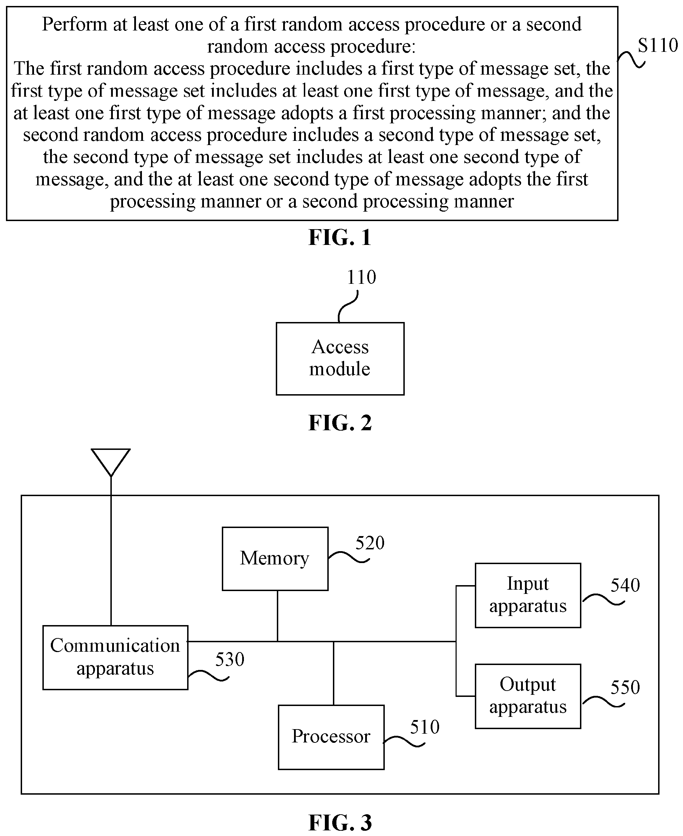

FIG. 1 is a flowchart of a random access method according to an embodiment. As shown in FIG. 1, the method provided in this embodiment may be applied to a communication node, which may include a terminal device, a base station, or other network devices. The method includes 110.

In 110, performing at least one of a first random access procedure or a second random access procedure; where the first random access procedure includes a first type of message set, the first type of message set includes at least one first type of message, and the at least one first type of message adopts a first processing manner; and the second random access procedure includes a second type of message set, the second type of message set includes at least one second type of message, and the at least one second type of message adopts the first processing manner or a second processing manner.

In this embodiment, the first type of message set may include Msg1, Msg2, Msg3, and Msg4 in the NR system. The first type of message set may also include messages such as Msg1, Msg2, Msg3, and Msg4 in other systems. The first type of message may be any one of Msg1, Msg2, Msg3, or Msg4, and multiple first type of messages form the first type of message set. Msg1 is a random access signal, Msg2 is the response information sent by the second communication node (the network device or the base station) to the first communication node (the terminal device) for Msg1, Msg3 is an uplink message, and Msg4 is the response information sent by the second communication node (the network device or the base station) to the first communication node (the terminal device) for Msg3. In this embodiment, the content of the first type of message and the content of the second type of message may be the same or different, and the processing manner adopted by the first type of message and the processing manner adopted by the second type of message may be the same or different. The first type of message may adopt the first processing manner, and the second type of message may adopt the first processing manner or the second processing manner.

The random access procedure includes the transmission or reception of multiple messages between the first communication node and the second communication node, and the function includes at least one of the following: achieving uplink synchronization between the first communication node and the second communication node; achieving the transition from the Radio Resource Control (RRC) idle state to the RRC connected state; performing mobility management in the RRC connected state of the first communication node, such as achieving uplink synchronization with neighbor cells during handover; triggering uplink resynchronization of the first communication node through a downlink instruction when the second communication node detects uplink out-of-synchronization of the first communication node; achieving resynchronization through uplink random access when the first communication node detects downlink out-of-synchronization; initiating random access to achieve resource contention when scheduling in the connected state of the first communication node is not timely and the number of times scheduling in the connected state of the first communication node is not timely exceeds a certain threshold; acquiring system information (SI); or performing synchronization recovery after the beam failure.

The random access procedure includes the following steps.

In step 1, the first communication node receives the Synchronization Signal/Physical Broadcast Channel Block (SSB) sent by the second communication node. Since the SSB may be sent in a multi-beam manner, the SSB information may be sent out in different beam directions. Then, the first communication node may select the beam direction corresponding to one SSB according to the received SSB, further select the PRACH resource corresponding to the beam direction, and send a random access signal (Msg1) on the PRACH resource to start the random access process. The SSB includes a Primary Synchronization Signal (PSS), a Secondary Synchronization Signal (SSS), and a Physical Broadcast Channel (PBCH).

In step 2, the second communication node sends the response information Msg2 to the first communication node for Msg1. The scheduling information for Msg2 is carried in the downlink control information (DCI) on the Physical Downlink Control Channel (PDCCH), and Msg2 is carried and transmitted on the Physical Downlink Shared Channel (PDSCH).

Msg2 includes one or more information packets, where each information packet includes at least the index information of a random access signal. The index information of the random access signal is used for indicating that the information packet is a response to the random access signal corresponding to the index information.

After sending Msg1, the first communication node detects the PDCCH carrying the scheduling information for Msg2 sent by the second communication node within a time window and then detects Msg2 according to the scheduling information carried in the DCI on the detected PDCCH.

In step 3, the first communication node sends the Msg3 message on the Physical Uplink Shared Channel (PUSCH) indicated by resource allocation information for the PUSCH in Msg2.

In step 4, after receiving the Msg3 message sent by the terminal device, the second communication node sends a response message Msg4 to the terminal device for Msg3. Msg4 is carried on the PDSCH scheduled by the PDCCH.

The first communication node may be a terminal, and the second communication node may be a base station.

In this embodiment, a message/signaling/channel may adopt at least two processing manners, which are defined as the first processing manner and the second processing manner. The processing manner may include at least one of the following: a sending manner, a receiving manner, a resource configuration manner, a sending format, a scheduling manner, a format of carried information, or a transmission configuration. In the first random access procedure, the messages/signaling/channels (that is, the first type of messages) involved in step 1 to step 4 adopt the first processing manner. In the second random access procedure, the messages/signaling/channels (that is, the second type of messages) involved in 1 to 4 adopt the first processing manner or the second processing manner.

In this embodiment, a communication node accesses a communication system by performing the first random access procedure and/or the second random access procedure. In the second random access procedure, the second type of message adopts the first processing manner or the second processing manner, thereby greatly improving the success rate of the communication node accessing the communication system.

In an embodiment, the first processing manner is a configurable processing manner, and the processing manner includes at least one of the following: a manner of generating a message, signaling, or channel; a manner of sending a message, signaling, or channel; a manner of receiving a message, signaling, or channel; a format of information carried in a message, signaling, or channel; content of information carried in a message, signaling, or channel; or a transmission configuration of a message, signaling, or channel.

In this embodiment, the configurable processing manner may include one configuration or multiple configurations. When multiple configurations exist, the configurable processing manner to be adopted may be indicated by the indication information, or the configurable processing manner to be adopted may be determined through condition triggering.

The first processing manner may include at least one of the following: a pre-configured manner of generating a message, signaling, or channel; a pre-configured manner of sending a message, signaling, or channel; a pre-configured manner of receiving a message, signaling, or channel; a pre-configured format of information carried in a message, signaling, or channel; pre-configured content of information carried in a message, signaling, or channel; or a pre-configured transmission configuration of a message, signaling, or channel.

In this embodiment, the sending manner may include a transmission antenna configuration, such as single-antenna transmission or multi-antenna transmission; the receiving manner may include a reception antenna configuration, such as single-antenna reception or multi-antenna reception; and different formats of carried information correspond to different functions of the information carried in the message/signaling/channel or correspond to different application scenarios of the information carried in the message/signaling/channel.

In an embodiment, the second processing manner is a processing manner determined by at least one of a first communication node or a second communication node, and the processing manner includes at least one of the following: a manner of generating a message, signaling, or channel; a manner of sending a message, signaling, or channel; a manner of receiving a message, signaling, or channel; a format of information carried in a message, signaling, or channel; content of information carried in a message, signaling, or channel; or a transmission configuration of a message, signaling, or channel.

In this embodiment, the second processing manner includes at least one of the following: a manner of generating a message/signaling/channel; a manner of sending a message/signaling/channel; a manner of receiving a message/signaling/channel; a format of information carried in a message/signaling/channel; content of information carried in a message/signaling/channel; or a transmission configuration of a message/signaling/channel.

The transmission configuration set includes at least one transmission configuration. A transmission configuration includes at least the following configuration information: time-domain resources and/or frequency-domain resources. It is to be understood that the transmission configuration may also be referred to as a sending configuration, a resource configuration, or the like, which is not limited in the present application.

In some embodiments, a transmission configuration corresponds to a sending manner and/or a receiving manner, and the configuration information in the transmission configuration is used for supporting the sending manner and/or the receiving manner.

In some embodiments, the transmission configuration may further include at least one of the following pieces of configuration information: reference signal resources, a discrete fourier transformation (DFT) vector, a signal multiplexing manner, a transmitter spatial filter, transmitter coding, codewords of transmitter coding, a transmitter antenna port, a transmitter antenna weight vector, a transmitter antenna weight matrix, a receiver spatial filter, receiver coding, codewords of receiver coding, a receiver antenna port, a receiver antenna weight vector, a receiver antenna weight matrix, an angle of departure (AOD), a zenith angle of departure (ZOD), an angle of arrival (AOA), a zenith angle of arrival (ZOA), a vector or vector index constructed from at least one of the AOA, the AOD, the ZOD, or the ZOA, or codewords in the codebook. The reference signal resources include at least one of the time-domain resources, frequency-domain resources, code-domain resources, or port information of the reference signal; and the reference signal includes a sounding reference signal (SRS). The signal multiplexing manner includes at least one of the following: space-division multiplexing, time-division multiplexing, or frequency-division multiplexing.

In some embodiments, the transmission configuration may further include at least one of the following pieces of configuration information: a transmit beam, a transmit beam group, transmit beam index information, a transmit beam group index, a transmit beam pair, transmit beam number information, transmit beam direction information, a receive beam, a receive beam group, receive beam index information, a receive beam group index, a receive beam pair, receive beam index information, receive beam number information, or receive beam direction information.

In some embodiments, the transmission configuration may further include at least one of the following pieces of configuration information: a spatial filter, a spatial reception parameter, or a spatial transmission parameter. The spatial filter may be at least one of the following: a DFT vector, a precoding vector, a DFT matrix, a precoding matrix, a vector formed by a linear combination of multiple DFTs, or a vector formed by a linear combination of multiple precoding vectors.

It is to be understood that the content included in the preceding transmission configuration is merely an example. As actual requirements change and network architecture evolves, the transmission configuration may include other possible contents, which are not limited in the embodiments of the present application.

In this embodiment, the first communication node may include a terminal, and the second communication node may include a base station or other network devices.

The determination of the second processing manner includes at least one of the following: determining a generation manner of a message/signaling/channel by the first communication node, the second communication node, or jointly by the first communication node and the second communication node; determining a sending manner of a message/signaling/channel by the first communication node, the second communication node, or jointly by the first communication node and the second communication node; determining a reception manner of a message/signaling/channel by the first communication node, the second communication node, or jointly by the first communication node and the second communication node; determining a format of information carried in a message/signaling/channel by the first communication node, the second communication node, or jointly by the first communication node and the second communication node; determining content of information carried in a message/signaling/channel by the first communication node, the second communication node, or jointly by the first communication node and the second communication node; or determining a transmission configuration of a message/signaling/channel by the first communication node, the second communication node, or jointly by the first communication node and the second communication node.

In some embodiments, the first communication node and/or the second communication node may further determine the second processing manner for the message/signaling/channel through a first reference information set. The first reference information set includes at least one of the following: configuration information of a downlink reference signal/channel, configuration information of an uplink reference signal/channel, configuration information of a downlink signal/channel, configuration information of an uplink signal/channel, measurement or detection information of a downlink reference signal/channel, measurement or detection information of an uplink reference signal/channel, measurement or detection information of an uplink signal/channel, or measurement or detection information of a downlink signal/channel.

In some embodiments, the first communication node and/or the second communication node may further determine the second processing manner for the message/signaling/channel through a first functional module. The first functional module may also be referred to as a learning module, an AI module, a configuration estimation module, a resource allocation module, or the like, which is not limited in the embodiments of the present application. As an example, the output information of the first functional module may include one or more second processing manners for messages/signaling/channels. When multiple second processing manners for messages/signaling/channels are included, one second processing manner is selected as the second processing manner for messages/signaling/channels.

In some embodiments, AI includes self-learning devices, components, software, or modules featuring machine learning (ML), deep learning, reinforcement learning, transfer learning, deep reinforcement learning, or meta-learning. In some embodiments, the AI is implemented by an AI network (or a neural network), and the neural network includes multiple layers, where each layer includes at least one node. In an example, the neural network includes an input layer, an output layer, and at least one hidden layer, where each layer of the neural network includes, but is not limited to, at least one of a fully connected layer, a dense layer, a convolutional layer, a transposed convolutional layer, a direct connection layer, an activation function, a normalization layer, or a pooling layer. In some embodiments, each layer of the neural network may include one sub-neural network, such as a residual network (ResNet) block, a dense network (DenseNet) block, or a recurrent neural network (RNN). The AI network includes neural network models and/or neural network parameters corresponding to the neural network models. The neural network models may be referred to as network models for short. The neural network parameters may be referred to as network parameters for short. The network model defines the network architecture of the neural network, such as the number of layers, a size of each layer, an activation function, a linking situation, a convolution kernel, a size of a convolution stride, and a convolution type (for example, 1D convolution, 2D convolution, 3D convolution, hollow convolution, transposed convolution, separable convolution, group convolution, or dilated convolution). The network parameter includes a weight and/or a bias of each layer in the network model and their values. One network model may correspond to multiple sets of different values of neural network parameters to adapt to different scenarios. The values of network parameters may be obtained through offline training and/or online training. One neural network model may correspond to multiple different values of neural network parameters.

In an embodiment, the at least one second type of message includes a second type of message A and a second type of message B, and a processing manner of the second type of message A includes at least one of the following: a processing manner the same as a processing manner of the second type of message B; a processing manner determined by a processing manner of the second type of message B; or a processing manner indicated by the second type of message B; where the second type of message B is one or more second type of messages in the second type of message set and preceding the second type of message A.

In this embodiment, the second type of message A and the second type of message B are messages in the second type of message set. The second type of message B is located before the second type of message A in the second type of message set. The second type of message B may include at least one second type of message.

The second type of message B is sent before the second type of message A is sent, or the second type of message B is received before the second type of message A is received.

In an embodiment, the second type of message A and the second type of message B are uplink messages or downlink messages.

In this embodiment, the message sent by the first communication node to the second communication node is referred to as an uplink message, and the message sent by the second communication node to the first communication node is referred to as a downlink message. For example, the message sent by a terminal device to a base station is referred to as an uplink message, and the message sent by a base station to a terminal device is referred to as a downlink message.

In an embodiment, a processing manner of the second type of message includes at least one of the following: a processing manner the same as a processing manner of a third type of message, signaling, or channel; a processing manner determined by a processing manner of a third type of message, signaling, or channel; or a processing manner indicated by a third type of message, signaling, or channel; where the third type of message, signaling, or channel is sent or received prior to the second type of message set.

In an embodiment, a processing manner of the second type of message includes at least one of the following: a processing manner the same as a processing manner of a fourth type of message, signaling, or channel; a processing manner determined by a processing manner of a fourth type of message, signaling, or channel; or a processing manner indicated by a fourth type of message, signaling, or channel.

The fourth type of message includes at least one of the following: first type of system information; a message, signaling, or channel carrying first type of system information; a message, signaling, or channel carrying scheduling information for first type of system information; second type of system information; a message, signaling, or channel carrying second type of system information; a message, signaling, or channel carrying scheduling information for second type of system information; or system synchronization information.

The SI includes at least one of the following: the first type of SI or the second type of SI.

In this embodiment, the first type of SI may be a Master Information Block (MIB), and the channel for the MIB may be the PBCH; the second type of SI may be a System Information Block (SIB), and the channel for the SIB may be the PDSCH; and the channel for the scheduling information for the SIB may be the PDCCH.

The MIB is the master information block of the system and is generally broadcast periodically by the first node to all second nodes. The MIB contains basic system configuration information, such as the system bandwidth and the frame structure. The second node may acquire key system parameters by parsing the MIB, thereby enabling correct access to the system.

The SIB is a block carrying additional system information. Compared with the MIB, the SIB contains more detailed system information, such as cell parameters, neighbor cell information, and system broadcast messages. The information contained in the SIB is relatively fixed but changes over time, so the second node needs to acquire the latest SIB information regularly.

In some embodiments, the system information includes at least one first type of system information, and information carried in each piece of first type of system information is independently configured or not the same.

In some embodiments, the system information includes at least one second type of system information, and information carried in each piece of second type of system information is independently configured or not the same.

In embodiment 1, in a wireless communication system, a message/signaling/channel may adopt at least two processing manners, which are defined as the first processing manner and the second processing manner. The first processing manner includes at least one of the following: a pre-configured manner of generating a message/signaling/channel; a pre-configured manner of sending a message/signaling/channel; a pre-configured manner of receiving a message/signaling/channel; a pre-configured format of information carried in a message/signaling/channel; pre-configured content of information carried in a message/signaling/channel; or a pre-configured transmission configuration of a message/signaling/channel. The determination of the second processing manner includes at least one of the following: determining a generation manner of a message/signaling/channel by the terminal, the base station, or jointly by the base station and the terminal; determining a sending manner of a message/signaling/channel by the terminal, the base station, or jointly by the base station and the terminal; determining a reception manner of a message/signaling/channel by the terminal, the base station, or jointly by the base station and the terminal; determining a format of information carried in a message/signaling/channel by the terminal, the base station, or jointly by the base station and the terminal; determining content of information carried in a message/signaling/channel by the terminal, the base station, or jointly by the base station and the terminal; or determining a transmission configuration of a message/signaling/channel by the terminal, the base station, or jointly by the base station and the terminal.

In this embodiment, the wireless communication system is configured with two access procedures, which are the first random access procedure and the second random access procedure. The message/signaling/channel in the first random access procedure adopts the first processing manner, and a processing manner of the message/signaling/channel in the second random access procedure is the same as a processing manner of the fourth type of message/signaling/channel.

The fourth type of message is at least one of the following: an MIB; a message, signaling, or channel carrying an MIB; a message, signaling, or channel carrying scheduling information for an MIB; an SIB; a message, signaling, or channel carrying an SIB; a message, signaling, or channel carrying scheduling information for an SIB; or system synchronization information.

In this embodiment, the message/signaling/channel carrying the MIB is the PBCH; the message/signaling/channel carrying the SIB is the PDSCH; and the message/signaling/channel carrying the scheduling information for the SIB is the PDCCH.

In embodiment 2, based on embodiment 1, the wireless communication system is configured with two access procedures, which are the first random access procedure and the second random access procedure. The message/signaling/channel in the first random access procedure adopts the first processing manner, and a processing manner of the message/signaling/channel in the second random access procedure is the same as a processing manner of the most recently detected fourth type of message/signaling/channel among the fourth type of messages/signaling/channels.

The fourth type of message is at least one of the following: an MIB; a message, signaling, or channel carrying an MIB; a message, signaling, or channel carrying scheduling information for an MIB; an SIB; a message, signaling, or channel carrying an SIB; a message, signaling, or channel carrying scheduling information for an SIB; or system synchronization information.

In this embodiment, the most recently detected fourth type of message/signaling/channel is the fourth type of message/signaling/channel that is closest to the start of the second random access procedure.

In embodiment 3, based on embodiment 1, the wireless communication system is configured with two access procedures, which are the first random access procedure and the second random access procedure. The message/signaling/channel in the first random access procedure adopts the first processing manner, and the message/signaling/channel in the second random access procedure is indicated by the fourth type of message/signaling/channel.

The fourth type of message is at least one of the following: an MIB; a message, signaling, or channel carrying an MIB; a message, signaling, or channel carrying scheduling information for an MIB; an SIB; a message, signaling, or channel carrying an SIB; a message, signaling, or channel carrying scheduling information for an SIB; or system synchronization information.

In embodiment 4, based on embodiment 1, the wireless communication system is configured with two access procedures, which are the first random access procedure and the second random access procedure. The message/signaling/channel in the first random access procedure adopts the first processing manner. A processing manner of the message/signaling/channel in the second random access procedure is indicated by the most recently detected fourth type of message/signaling/channel among the fourth type of messages/signaling/channels.

The fourth type of message is at least one of the following: an MIB; a message, signaling, or channel carrying an MIB; a message, signaling, or channel carrying scheduling information for an MIB; an SIB; a message, signaling, or channel carrying an SIB; a message, signaling, or channel carrying scheduling information for an SIB; or system synchronization information.

In this embodiment, the most recently detected fourth type of message/signaling/channel is the fourth type of message/signaling/channel that is closest to the start of the second random access procedure.

In an embodiment, when the second random access procedure is performed, switching to the first random access procedure is performed in response to a first condition being satisfied, where the first condition includes at least one of the following: the number of failures of performing the second random access procedure is greater than or equal to a first threshold, where the first threshold is an integer greater than or equal to 1; or the number of transmission failures or reception failures of the second type of message during performing the second random access procedure is greater than or equal to a second threshold, where the second threshold is an integer greater than or equal to 1.

In this embodiment, if the number of failures of performing the second random access procedure is greater than or equal to the first threshold and/or the number of transmission failures or reception failures of the second type of message during performing the second random access procedure is greater than or equal to the second threshold, switching to the first random access procedure is performed.

In an embodiment, a second communication node receives a fifth type of message sent by a first communication node, where the fifth type of message includes at least one of the following: information indicating the failure of the second random access procedure; the number of times the second random access procedure fails; the number of retransmissions for the transmission failures or the reception failures of the second type of message in the second random access procedure; or resource configuration information used during the transmission failures or the reception failures of the second type of message in the second random access procedure.

In this embodiment, the number of times the second random access procedure fails may be the number of initial transmissions or the sum of the number of initial transmissions and the number of retransmissions.

The resource configuration information may include at least one of the following: time-domain resources, frequency-domain resources, transmitted sequence information, precoding information used, or codeword information used.

In an embodiment, when the second random access procedure is adopted, the number of transmissions, receptions, or retransmissions of the second type of message is reconfigured in response to a second condition being satisfied.

The second condition includes at least one of the following: the number of failures of performing the second random access procedure is greater than or equal to a third threshold, where the third threshold is an integer greater than or equal to 1; the number of transmission failures of the second type of message is greater than or equal to a third threshold, where the third threshold is an integer greater than or equal to 1; or the number of reception failures of the second type of message is greater than or equal to a third threshold, where the third threshold is an integer greater than or equal to 1.

In this embodiment, in the second random access procedure, if the number of failures of performing the second random access procedure is greater than or equal to the third threshold and/or the number of transmission failures or reception failures of the second type of message is greater than or equal to the third threshold, the number of transmissions, receptions, or retransmissions of the second type of message is reconfigured.

In some embodiments, the first type of message set in the first random access procedure includes at least one of the following: an access message, Msg1; a control channel carrying scheduling information for Msg2; a control channel carrying retransmission scheduling information for Msg2; an access message, Msg2; a control channel carrying scheduling information for Msg3; a control channel carrying retransmission scheduling information for Msg3; an access message, Msg3; a control channel carrying scheduling information for Msg4; a control channel carrying retransmission scheduling information for Msg4; or an access message, Msg4.

The second type of message set in the second random access procedure includes at least one of the following: an access message, Msg1; a control channel carrying scheduling information for Msg2; a control channel carrying retransmission scheduling information for Msg2; an access message, Msg2; a control channel carrying scheduling information for Msg3; a control channel carrying retransmission scheduling information for Msg3; an access message, Msg3; a control channel carrying scheduling information for Msg4; a control channel carrying retransmission scheduling information for Msg4; or an access message, Msg4.

In an embodiment, in the second random access procedure, a processing manner adopted by a first PDCCH is the same as a processing manner adopted by a second PDCCH.

The first PDCCH includes at least one of the following: a control channel carrying scheduling information for Msg2; a control channel carrying retransmission scheduling information for Msg2; a control channel carrying scheduling information for Msg3; a control channel carrying retransmission scheduling information for Msg3; a control channel carrying scheduling information for Msg4; or a control channel carrying retransmission scheduling information for Msg4. The second PDCCH includes a control channel prior to the second random access procedure.

Msg1 is a random access signal, Msg2 is the response information sent by the second communication node to the first communication node for Msg1, Msg3 is an uplink message, and Msg4 is the response information sent by the second communication node to the first communication node for Msg3.

In an embodiment, when the first PDCCH adopts the second processing manner, at least one of the following of the first PDCCH is determined in the second processing manner: information carried in the first PDCCH; demodulation reference signal (DMRS) configuration in the first PDCCH; a coding scheme of the first PDCCH; a modulation scheme of the first PDCCH; a coding scheme and a modulation scheme of the first PDCCH; or a code rate of the first PDCCH.

In an embodiment, a processing manner adopted by Msg2 in the second random access procedure is determined by at least one of the following: determining the processing manner for Msg2 according to a system load level; being the same as a processing manner of a control channel carrying scheduling information for Msg2; being the same as a processing manner of a control channel carrying retransmission scheduling information for Msg2; indicated by a control channel carrying scheduling information for Msg2; indicated by a control channel carrying retransmission scheduling information for Msg2; when Msg2 resources indicated by multiple control channels carrying scheduling information for Msg2 are the same, overlap, or partially overlap, adopting, by Msg2, the first processing manner; or when Msg2 resources indicated by multiple control channels carrying retransmission scheduling information for Msg2 are the same, overlap, or partially overlap, adopting, by Msg2, the first processing manner.

Msg1 is a random access signal, and Msg2 is the response information sent by the second communication node to the first communication node for Msg1.

In an embodiment, a processing manner adopted by Msg3 in the second random access procedure is determined by at least one of the following: determining the processing manner for Msg3 according to a system load level; being the same as a processing manner of a control channel carrying scheduling information for Msg3; being the same as a processing manner of a control channel carrying retransmission scheduling information for Msg3; indicated by a control channel carrying scheduling information for Msg3; indicated by a control channel carrying retransmission scheduling information for Msg3; when Msg3 resources indicated by multiple control channels carrying scheduling information for Msg3 are the same, overlap, or partially overlap, adopting, by Msg3, the first processing manner; or when Msg3 resources indicated by multiple control channels carrying retransmission scheduling information for Msg3 are the same, overlap, or partially overlap, adopting, by Msg3, the first processing manner.

Msg3 is an uplink message. In an embodiment, a processing manner adopted by Msg4 in the second random access procedure is determined by at least one of the following: determining the processing manner for Msg4 according to a system load level; being the same as a processing manner of a control channel carrying scheduling information for Msg4; being the same as a processing manner of a control channel carrying retransmission scheduling information for Msg4; indicated by a control channel carrying scheduling information for Msg4; indicated by a control channel carrying retransmission scheduling information for Msg4; when Msg4 resources indicated by multiple control channels carrying scheduling information for Msg4 are the same, overlap, or partially overlap, adopting, by Msg4, the first processing manner; or when Msg4 resources indicated by multiple control channels carrying retransmission scheduling information for Msg4 are the same, overlap, or partially overlap, adopting, by Msg4, the first processing manner.

Msg3 is an uplink message, and Msg4 is the response information sent by the second communication node to the first communication node for Msg3.

In an embodiment, in the second random access procedure, a processing manner of a second type of message sent later or received later is the same as a processing manner of a second type of message sent earlier or received earlier.

At least one second type of message in the second random access procedure includes: a first access message, Msg1; a control channel carrying scheduling information for Msg2; a control channel carrying retransmission scheduling information for Msg2; a second access message, Msg2; a control channel carrying scheduling information for Msg3; a control channel carrying retransmission scheduling information for Msg3; a third access message, Msg3; a control channel carrying scheduling information for Msg4; a control channel carrying retransmission scheduling information for Msg4; or a fourth access message, Msg4.

Msg1 is a random access signal, Msg2 is the response information sent by the second communication node to the first communication node for Msg1, Msg3 is an uplink message, and Msg4 is the response information sent by the second communication node to the first communication node for Msg3.

In embodiment 5, in a wireless communication system, the random access procedure includes the following steps.

In step 1, the terminal receives the SSB sent by the base station. Since the SSB may be sent in a multi-beam manner, the SSB information may be sent out in different beam directions. Then, the terminal may select the beam direction corresponding to one SSB according to the received SSB, further select the PRACH resource corresponding to the beam direction, and send a random access signal (Msg1) on the PRACH resource to start the random access process. The SSB includes a PSS, an SSS, and a PBCH.

In this embodiment, the configuration information of Msg1 is carried in the SIB and transmitted. The configuration information of Msg1 includes at least one of the following: the configuration of the random access signal; the configuration of the time-frequency resources occupied by the random access signal, that is, the configuration of the PRACH resources; or the time advance (TA) for the random access signal transmission configuration.

In step 2, the base station sends the response information Msg2 to the terminal for Msg1. The scheduling information for Msg2 is carried in the DCI on the PDCCH, and Msg2 is carried and transmitted on the PDSCH.

Msg2 includes one or more information packets, where each information packet includes at least the index information of a random access signal. The index information of the random access signal is used for indicating that the information packet is a response to the random access signal corresponding to the index information.

After sending Msg1, the terminal detects the PDCCH carrying the scheduling information for Msg2 sent by the base station within a time window and then detects Msg2 according to the scheduling information carried in the DCI on the detected PDCCH.

Further, the information packet in Msg2 further includes resource allocation information for the PUSCH, which is used for the terminal to transmit an uplink message. The uplink message is referred to as Msg3.

In step 3, the terminal sends the Msg3 message on the PUSCH indicated by resource allocation information for the PUSCH in Msg2. The Msg3 message includes identification information of the terminal.

In step 4, after receiving the Msg3 message sent by the user equipment (UE), the base station sends a response message Msg4 of Msg3 to the terminal. Msg4 is carried on the PDSCH scheduled by the PDCCH.

In a wireless communication system, a message/signaling/channel may adopt at least two processing manners, which are defined as the first processing manner and the second processing manner. The first processing manner includes at least one of the following: a pre-configured manner of generating a message/signaling/channel; a pre-configured manner of sending a message/signaling/channel; a pre-configured manner of receiving a message/signaling/channel; a pre-configured format of information carried in a message/signaling/channel; pre-configured content of information carried in a message/signaling/channel; or a pre-configured transmission configuration of a message/signaling/channel. The determination of the second processing manner includes at least one of the following: determining a generation manner of a message/signaling/channel by the terminal, the base station, or jointly by the base station and the terminal; determining a sending manner of a message/signaling/channel by the terminal, the base station, or jointly by the base station and the terminal; determining a reception manner of a message/signaling/channel by the terminal, the base station, or jointly by the base station and the terminal; determining a format of information carried in a message/signaling/channel by the terminal, the base station, or jointly by the base station and the terminal; determining content of information carried in a message/signaling/channel by the terminal, the base station, or jointly by the base station and the terminal; or determining a transmission configuration of a message/signaling/channel by the terminal, the base station, or jointly by the base station and the terminal.

In this embodiment, the wireless communication system is configured with two random access procedures, which are the first random access procedure and the second random access procedure. In the first random access procedure, the messages/signaling/channels involved in 1 to 4 adopt the first processing manner. The processing manner adopted by the messages/signaling/channels involved in 1 to 4 in the second random access procedure is the same as the processing manner adopted by the fourth type of message/signaling/channel.

The fourth type of message is at least one of the following: an MIB; a message, signaling, or channel carrying an MIB; a message, signaling, or channel carrying scheduling information for an MIB; an SIB; a message, signaling, or channel carrying an SIB; a message, signaling, or channel carrying scheduling information for an SIB; or system synchronization information.

In this embodiment, the message/signaling/channel carrying the MIB is the PBCH.

In this embodiment, the message/signaling/channel carrying the SIB is the PDSCH.

In this embodiment, the message/signaling/channel carrying the scheduling information for the SIB is the PDCCH.

In embodiment 6, based on embodiment 5, the wireless communication system is configured with two random access procedures, which are the first random access procedure and the second random access procedure. In the first random access procedure, the messages/signaling/channels involved in 1 to 4 adopt the first processing manner. The processing manner adopted by the messages/signaling/channels involved in 1 to 4 in the second random access procedure includes: in the second random access procedure, the processing manner adopted by the first PDCCH is the same as the processing manner adopted by the second PDCCH.

The first PDCCH includes at least one of the following: a control channel carrying scheduling information for Msg2; a control channel carrying retransmission scheduling information for Msg2; a control channel carrying scheduling information for Msg3; a control channel carrying retransmission scheduling information for Msg3; a control channel carrying scheduling information for Msg4; or a control channel carrying retransmission scheduling information for Msg4.

The second PDCCH is at least one of the following: a control channel prior to the second random access procedure.

In this embodiment, when the first PDCCH adopts the second processing manner, at least one of the following of the first PDCCH is determined in the second processing manner: information carried in the first PDCCH; DMRS configuration in the first PDCCH; a coding scheme of the first PDCCH; a modulation scheme of the first PDCCH; a coding scheme and a modulation scheme of the first PDCCH; or a code rate of the first PDCCH.

In embodiment 7, based on embodiment 5, the wireless communication system is configured with two random access procedures, which are the first random access procedure and the second random access procedure. In the first random access procedure, the messages/signaling/channels involved in 1 to 4 adopt the first processing manner. The processing manner adopted by the messages/signaling/channels involved in 1 to 4 in the second random access procedure includes: the processing manner adopted by Msg2 in the second random access procedure is determined by at least one of the following: determining the processing manner for Msg2 according to a system load level; being the same as a processing manner of a control channel carrying scheduling information for Msg2; being the same as a processing manner of a control channel carrying retransmission scheduling information for Msg2; indicated by a control channel carrying scheduling information for Msg2; indicated by a control channel carrying retransmission scheduling information for Msg2; when Msg2 resources indicated by multiple control channels carrying scheduling information for Msg2 are the same, overlap, or partially overlap, adopting, by Msg2, the first processing manner; or when Msg2 resources indicated by multiple control channels carrying retransmission scheduling information for Msg2 are the same, overlap, or partially overlap, adopting, by Msg2, the first processing manner.

In embodiment 8, based on embodiment 5, the wireless communication system is configured with two random access procedures, which are the first random access procedure and the second random access procedure. In the first random access procedure, the messages/signaling/channels involved in 1 to 4 adopt the first processing manner. The processing manner adopted by the messages/signaling/channels involved in 1 to 4 in the second random access procedure includes: the processing manner adopted by Msg3 in the second random access procedure is determined by at least one of the following: determining the processing manner for Msg3 according to a system load level; being the same as a processing manner of a control channel carrying scheduling information for Msg3; being the same as a processing manner of a control channel carrying retransmission scheduling information for Msg3; indicated by a control channel carrying scheduling information for Msg3; indicated by a control channel carrying retransmission scheduling information for Msg3; when Msg3 resources indicated by multiple control channels carrying scheduling information for Msg3 are the same, overlap, or partially overlap, adopting, by Msg3, the first processing manner; or when Msg3 resources indicated by multiple control channels carrying retransmission scheduling information for Msg3 are the same, overlap, or partially overlap, adopting, by Msg3, the first processing manner.

In embodiment 9, based on embodiment 5, the wireless communication system is configured with two random access procedures, which are the first random access procedure and the second random access procedure. In the first random access procedure, the messages/signaling/channels involved in 1 to 4 adopt the first processing manner. The processing manner adopted by the messages/signaling/channels involved in 1 to 4 in the second random access procedure includes: the processing manner adopted by Msg4 in the second random access procedure is determined by at least one of the following: determining the processing manner for Msg4 according to a system load level; being the same as a processing manner of a control channel carrying scheduling information for Msg4; being the same as a processing manner of a control channel carrying retransmission scheduling information for Msg4; indicated by a control channel carrying scheduling information for Msg4; indicated by a control channel carrying retransmission scheduling information for Msg4; when Msg4 resources indicated by multiple control channels carrying scheduling information for Msg4 are the same, overlap, or partially overlap, adopting, by Msg4, the first processing manner; or when Msg4 resources indicated by multiple control channels carrying retransmission scheduling information for Msg4 are the same, overlap, or partially overlap, adopting, by Msg4, the first processing manner.

Embodiments of the present application further provide a random access apparatus. FIG. 2 is a structural diagram of a random access apparatus according to an embodiment. As shown in FIG. 2, the apparatus may be configured in a communication node. The apparatus includes an access module 110 configured to perform at least one of a first random access procedure or a second random access procedure; where the first random access procedure includes a first type of message set, the first type of message set includes at least one first type of message, and the at least one first type of message adopts a first processing manner; and the second random access procedure includes a second type of message set, the second type of message set includes at least one second type of message, and the at least one second type of message adopts the first processing manner or a second processing manner.

The random access apparatus in this embodiment enables a communication node to access a communication system by performing the first random access procedure and/or the second random access procedure. In the second random access procedure, the second type of message adopts the first processing manner or the second processing manner, thereby greatly improving the success rate of the communication node accessing the communication system.

In an embodiment, the first processing manner is a configurable processing manner, and the processing manner includes at least one of the following: a manner of generating a message, signaling, or channel; a manner of sending a message, signaling, or channel; a manner of receiving a message, signaling, or channel; a format of information carried in a message, signaling, or channel; content of information carried in a message, signaling, or channel; or a transmission configuration of a message, signaling, or channel.

In an embodiment, the second processing manner is a processing manner determined by at least one of a first communication node or a second communication node, and the processing manner includes at least one of the following: a manner of generating a message, signaling, or channel; a manner of sending a message, signaling, or channel; a manner of receiving a message, signaling, or channel; a format of information carried in a message, signaling, or channel; content of information carried in a message, signaling, or channel; or a transmission configuration of a message, signaling, or channel.

In an embodiment, the at least one second type of message includes a second type of message A and a second type of message B, and a processing manner of the second type of message A includes at least one of the following: a processing manner the same as a processing manner of the second type of message B; a processing manner determined by a processing manner of the second type of message B; or a processing manner indicated by the second type of message B; where the second type of message B is one or more second type of messages in the second type of message set and preceding the second type of message A.

In an embodiment, the second type of message A and the second type of message B are uplink messages or downlink messages.

In an embodiment, a processing manner of the second type of message includes at least one of the following: a processing manner the same as a processing manner of a third type of message, signaling, or channel; a processing manner determined by a processing manner of a third type of message, signaling, or channel; or a processing manner indicated by a third type of message, signaling, or channel; where the third type of message/signaling/channel is sent or received prior to the second type of message set.

In an embodiment, a processing manner of the second type of message includes at least one of the following: a processing manner the same as a processing manner of a fourth type of message, signaling, or channel; a processing manner determined by a processing manner of a fourth type of message, signaling, or channel; or a processing manner indicated by a fourth type of message, signaling, or channel; where the fourth type of message includes at least one of the following: first type of SI; a message, signaling, or channel carrying first type of SI; a message, signaling, or channel carrying scheduling information for first type of SI; second type of SI; a message, signaling, or channel carrying second type of SI; a message, signaling, or channel carrying scheduling information for second type of SI; or system synchronization information.

In an embodiment, when the second random access procedure is performed, switching to the first random access procedure is performed in response to a first condition being satisfied, where the first condition includes at least one of the following: the number of failures of performing the second random access procedure is greater than or equal to a first threshold, where the first threshold is an integer greater than or equal to 1; or the number of transmission failures or reception failures of the second type of message during performing the second random access procedure is greater than or equal to a second threshold, where the second threshold is an integer greater than or equal to 1.

In an embodiment, a second communication node receives a fifth type of message sent by a first communication node, where the fifth type of message includes at least one of the following: information indicating the failure of the second random access procedure; the number of times the second random access procedure fails; the number of retransmissions for the transmission failures or the reception failures of the second type of message in the second random access procedure; or resource configuration information used during the transmission failures or the reception failures of the second type of message in the second random access procedure.

In an embodiment, when the second random access procedure is adopted, the number of transmissions, receptions, or retransmissions of the second type of message is reconfigured in response to a second condition being satisfied.

The second condition includes at least one of the following: the number of failures of performing the second random access procedure is greater than or equal to a third threshold, where the third threshold is an integer greater than or equal to 1; the number of transmission failures of the second type of message is greater than or equal to a third threshold, where the third threshold is an integer greater than or equal to 1; or the number of reception failures of the second type of message is greater than or equal to a third threshold, where the third threshold is an integer greater than or equal to 1.

In an embodiment, in the second random access procedure, a processing manner adopted by a first PDCCH is the same as a processing manner adopted by a second PDCCH.

The first PDCCH includes at least one of the following: a control channel carrying scheduling information for Msg2; a control channel carrying retransmission scheduling information for Msg2; a control channel carrying scheduling information for Msg3; a control channel carrying retransmission scheduling information for Msg3; a control channel carrying scheduling information for Msg4; or a control channel carrying retransmission scheduling information for Msg4. The second PDCCH includes a control channel prior to the second random access procedure.

In an embodiment, when the first PDCCH adopts the second processing manner, at least one of the following of the first PDCCH is determined in the second processing manner: information carried in the first PDCCH; DMRS configuration in the first PDCCH; a coding scheme of the first PDCCH; a modulation scheme of the first PDCCH; a coding scheme and a modulation scheme of the first PDCCH; or a code rate of the first PDCCH.

In an embodiment, a processing manner adopted by Msg2 in the second random access procedure is determined by at least one of the following: determining the processing manner for Msg2 according to a system load level; being the same as a processing manner of a control channel carrying scheduling information for Msg2; being the same as a processing manner of a control channel carrying retransmission scheduling information for Msg2; indicated by a control channel carrying scheduling information for Msg2; indicated by a control channel carrying retransmission scheduling information for Msg2; when Msg2 resources indicated by multiple control channels carrying scheduling information for Msg2 are the same, overlap, or partially overlap, adopting, by Msg2, the first processing manner; or when Msg2 resources indicated by multiple control channels carrying retransmission scheduling information for Msg2 are the same, overlap, or partially overlap, adopting, by Msg2, the first processing manner.

In an embodiment, a processing manner adopted by Msg3 in the second random access procedure is determined by at least one of the following: determining the processing manner for Msg3 according to a system load level; being the same as a processing manner of a control channel carrying scheduling information for Msg3; being the same as a processing manner of a control channel carrying retransmission scheduling information for Msg3; indicated by a control channel carrying scheduling information for Msg3; indicated by a control channel carrying retransmission scheduling information for Msg3; when Msg3 resources indicated by multiple control channels carrying scheduling information for Msg3 are the same, overlap, or partially overlap, adopting, by Msg3, the first processing manner; or when Msg3 resources indicated by multiple control channels carrying retransmission scheduling information for Msg3 are the same, overlap, or partially overlap, adopting, by Msg3, the first processing manner.

In an embodiment, a processing manner adopted by Msg4 in the second random access procedure is determined by at least one of the following: determining the processing manner for Msg4 according to a system load level; being the same as a processing manner of a control channel carrying scheduling information for Msg4; being the same as a processing manner of a control channel carrying retransmission scheduling information for Msg4; indicated by a control channel carrying scheduling information for Msg4; indicated by a control channel carrying retransmission scheduling information for Msg4; when Msg4 resources indicated by multiple control channels carrying scheduling information for Msg4 are the same, overlap, or partially overlap, adopting, by Msg4, the first processing manner; or when Msg4 resources indicated by multiple control channels carrying retransmission scheduling information for Msg4 are the same, overlap, or partially overlap, adopting, by Msg4, the first processing manner.

In an embodiment, in the second random access procedure, a processing manner of a second type of message sent later or received later is the same as a processing manner of a second type of message sent earlier or received earlier.

At least one second type of message in the second random access procedure includes: a first access message, Msg1; a control channel carrying scheduling information for Msg2; a control channel carrying retransmission scheduling information for Msg2; a second access message, Msg2; a control channel carrying scheduling information for Msg3; a control channel carrying retransmission scheduling information for Msg3; a third access message, Msg3; a control channel carrying scheduling information for Msg4; a control channel carrying retransmission scheduling information for Msg4; or a fourth access message, Msg4.

The random access apparatus provided in this embodiment and the random access method provided in the preceding embodiments belong to the same concept. For technical details not described in detail in this embodiment, reference may be made to any one of the preceding embodiments, and this embodiment has the same beneficial effects as the transmission method performed.

Embodiments of the present application further provide a communication node. FIG. 3 is a hardware structural diagram of a communication node according to an embodiment. As shown in FIG. 3, the communication node provided by the present application may be a base station, a terminal device, or a network device and may include a memory 520, a processor 510, and a computer program stored in the memory and executable by the processor, where the processor 510 executes the computer program to perform the preceding random access method.

The communication node may further include the memory 520. One or more processors 510 may be provided in the communication node, and one processor 510 is shown as an example in FIG. 3. The memory 520 is configured to store one or more programs which, when executed by the one or more processors 510, cause the one or more processors 510 to perform the random access method in the embodiments of the present application.

The communication node further includes a communication apparatus 530, an input apparatus 540, and an output apparatus 550.

The processor 510, the memory 520, the communication apparatus 530, the input apparatus 540, and the output apparatus 550 in the communication node may be connected through a bus or in other manners. The connection through a bus is used as an example in FIG. 2.

The input apparatus 540 may be used for receiving inputted digital or character information and for generating key signal input related to user settings and function control of the terminal device. The output apparatus 550 may include a display device such as a display screen.

The communication apparatus 530 may include a receiver and a sender. The communication apparatus 530 is configured to perform information transceiving communication under the control of the processor 510.

As a computer-readable storage medium, the memory 520 may be configured to store software programs, computer-executable programs, and modules, such as program instructions/modules (for example, the access module 110 in the random access apparatus) corresponding to the random access method of the embodiments of the present application. The memory 520 may include a program storage region and a data storage region, where the program storage region may store an operating system and an application program required by at least one function, and the data storage region may store data or the like created according to the use of the communication node. Additionally, the memory 520 may include a high-speed random-access memory and may also include a nonvolatile memory, such as at least one magnetic disk memory, a flash memory, or another nonvolatile solid-state memory. In some examples, the memory 520 may further include memories located remotely relative to the processors 510, and these remote memories may be connected to the communication node via a network. Examples of the network include, but are not limited to, the Internet, an intranet, a local area network, a mobile communication network, and a combination thereof.

Embodiments of the present application also provide a storage medium. The storage medium stores a computer program which, when executed by a processor, causes the processor to perform the random access method of any embodiment of the present application.

A computer storage medium according to the embodiments of the present application may be one computer-readable medium or any combination of multiple computer-readable media. The computer-readable medium may be a computer-readable signal medium or a computer-readable storage medium. For example, the computer-readable storage medium may be, but is not limited to, an electrical, magnetic, optical, electromagnetic, infrared, or semiconductor system, apparatus, or device or any combination thereof. Examples of the computer-readable storage medium include (a non-exhaustive list): an electrical connection having one or more wires, a portable computer magnetic disk, a hard disk, a random-access memory (RAM), a read-only memory (ROM), an erasable programmable read-only memory (EPROM), a flash memory, an optical fiber, a portable compact disc ROM (CD-ROM), an optical memory device, a magnetic memory device, or any suitable combination thereof. The computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. The data signal propagated in this manner may be in multiple forms, including, but not limited to, an electromagnetic signal, an optical signal, or any suitable combination thereof. The computer-readable signal medium may be any computer-readable medium other than the computer-readable storage medium. The computer-readable medium may send, propagate, or transmit a program used by or used in conjunction with an instruction execution system, apparatus, or device.

Program codes included in the computer-readable medium may be transmitted by any suitable medium including, but not limited to, a wireless medium, a wire, an optical cable, a radio frequency (RF), or any suitable combination thereof.

Computer program codes for performing operations of the present application may be written in one or more programming languages or a combination thereof. The programming languages include object-oriented programming languages such as Java, Smalltalk, and C++ and may further include conventional procedural programming languages such as "C" and similar programming languages. Program codes may be executed entirely on a user computer, executed partly on a user computer, executed as a standalone software package, executed partly on a user computer and partly on a remote computer, or executed entirely on a remote computer or a server. In the case where the remote computer is involved, the remote computer may be connected to the user computer through any type of network including a local area network (LAN) or a wide area network (WAN) or may be connected to an external computer (for example, via the Internet provided by an Internet service provider).

Embodiments of the present application further provide a computer program/program product. The computer program/program product is stored in a storage medium, is executed by at least one processor to cause the at least one processor to implement various processes of any of the preceding method embodiments, and can achieve the same technical effects. For the sake of brevity, the details are not repeated herein.

Embodiments of the present application further provide a processing apparatus, which is configured to implement various processes of any of the preceding method embodiments and can achieve the same technical effects. For the sake of brevity, the details are not repeated herein.

Example embodiments of the present application are described above and are not intended to limit the scope of the present application.

It is to be understood by those skilled in the art that the term "user equipment" encompasses any appropriate type of wireless user device, such as a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory apparatus and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

The detailed description of example embodiments of the present application is provided above through exemplary and non-limiting examples. However, considering the drawings and the claims, various modifications and adjustments to the preceding embodiments are apparent to those skilled in the art and do not deviate from the scope of the present application. Accordingly, the proper scope of the present application is determined according to the claims.

## Claims

1. A random access method, comprising:
performing at least one of a first random access procedure or a second random access procedure;
wherein the first random access procedure comprises a first type of message set, the first type of message set comprises at least one first type of message, and the at least one first type of message adopts a first processing manner; and
the second random access procedure comprises a second type of message set, the second type of message set comprises at least one second type of message, and the at least one second type of message adopts the first processing manner or a second processing manner.

2. The method of claim 1, wherein the first processing manner is a configurable processing manner, and the processing manner comprises at least one of the following:
a manner of generating a message, signaling, or channel;
a manner of sending a message, signaling, or channel;
a manner of receiving a message, signaling, or channel;
a format of information carried in a message, signaling, or channel;
content of information carried in a message, signaling, or channel; or
a transmission configuration of a message, signaling, or channel.

3. The method of claim 1, wherein the second processing manner is a processing manner determined by at least one of a first communication node or a second communication node, and the processing manner comprises at least one of the following:
a manner of generating a message, signaling, or channel;
a manner of sending a message, signaling, or channel;
a manner of receiving a message, signaling, or channel;
a format of information carried in a message, signaling, or channel;
content of information carried in a message, signaling, or channel; or
a transmission configuration of a message, signaling, or channel.

4. The method of claim 1, wherein the at least one second type of message comprises a second type of message A and a second type of message B, and a processing manner of the second type of message A comprises at least one of the following:
a processing manner the same as a processing manner of the second type of message B;
a processing manner determined by a processing manner of the second type of message B; or
a processing manner indicated by the second type of message B;
wherein the second type of message B is one or more second type of messages in the second type of message set and preceding the second type of message A.

5. The method of claim 4, wherein the second type of message A and the second type of message B are uplink messages or downlink messages.

6. The method of claim 1, wherein a processing manner of the at least one second type of message comprises at least one of the following:
a processing manner the same as a processing manner of a third type of message, signaling, or channel;
a processing manner determined by a processing manner of a third type of message, signaling, or channel; or
a processing manner indicated by a third type of message, signaling, or channel;
wherein the third type of message, signaling, or channel is sent or received prior to the second type of message set.

7. The method of claim 1, wherein a processing manner of the at least one second type of message comprises at least one of the following:
a processing manner the same as a processing manner of a fourth type of message, signaling, or channel;
a processing manner determined by a processing manner of a fourth type of message, signaling, or channel; or
a processing manner indicated by a fourth type of message, signaling, or channel;
wherein the fourth type of message comprises at least one of the following:
first type of system information; a message, signaling, or channel carrying first type of system information; a message, signaling, or channel carrying scheduling information for first type of system information; second type of system information; a message, signaling, or channel carrying second type of system information; a message, signaling, or channel carrying scheduling information for second type of system information; or system synchronization information.

8. The method of claim 1, wherein when the second random access procedure is performed, switching to the first random access procedure is performed in response to a first condition being satisfied, wherein the first condition comprises at least one of the following:
a number of failures of performing the second random access procedure is greater than or equal to a first threshold, wherein the first threshold is an integer greater than or equal to 1; or
a number of transmission failures or reception failures of a second type of message of the at least one second type of message during performing the second random access procedure is greater than or equal to a second threshold, wherein the second threshold is an integer greater than or equal to 1.

9. The method of claim 8, wherein a second communication node receives a fifth type of message sent by a first communication node, wherein the fifth type of message comprises at least one of the following:
information indicating a failure of the second random access procedure;
the number of failures of performing the second random access procedure;
a number of retransmissions for the transmission failures or the reception failures of the second type of message in the second random access procedure; or
resource configuration information used during the transmission failures or the reception failures of the second type of message in the second random access procedure.

10. The method of claim 1, wherein when the second random access procedure is adopted, a number of transmissions, receptions, or retransmissions of a second type of message of the at least one second type of message is reconfigured in response to a second condition being satisfied;
wherein the second condition comprises at least one of the following:
a number of failures of performing the second random access procedure is greater than or equal to a third threshold, wherein the third threshold is an integer greater than or equal to 1;
a number of transmission failures of the second type of message is greater than or equal to a third threshold, wherein the third threshold is an integer greater than or equal to 1; or
a number of reception failures of the second type of message is greater than or equal to a third threshold, wherein the third threshold is an integer greater than or equal to 1.

11. The method of claim 1, wherein in the second random access procedure, a processing manner adopted by a first physical downlink control channel, PDCCH, is the same as a processing manner adopted by a second PDCCH;
wherein the first PDCCH comprises at least one of the following:
a control channel carrying scheduling information for Msg2;
a control channel carrying retransmission scheduling information for Msg2;
a control channel carrying scheduling information for Msg3;
a control channel carrying retransmission scheduling information for Msg3;
a control channel carrying scheduling information for Msg4; or
a control channel carrying retransmission scheduling information for Msg4;
wherein the second PDCCH comprises a control channel prior to performing the second random access procedure.

12. The method of claim 11, wherein when the first PDCCH adopts the second processing manner, at least one of the following of the first PDCCH is determined in the second processing manner:
information carried in the first PDCCH;
demodulation reference signal, DMRS, configuration in the first PDCCH;
a coding scheme of the first PDCCH;
a modulation scheme of the first PDCCH;
a coding scheme and a modulation scheme of the first PDCCH; or
a code rate of the first PDCCH.

13. The method of claim 1, wherein a processing manner adopted by Msg2 in the second random access procedure is determined by at least one of the following:
determining the processing manner for Msg2 according to a system load level;
being the same as a processing manner of a control channel carrying scheduling information for Msg2;
being the same as a processing manner of a control channel carrying retransmission scheduling information for Msg2;
indicated by a control channel carrying scheduling information for Msg2;
indicated by a control channel carrying retransmission scheduling information for Msg2;
when Msg2 resources indicated by a plurality of control channels carrying scheduling information for Msg2 are the same, overlap, or partially overlap, adopting, by Msg2, the first processing manner; or
when Msg2 resources indicated by a plurality of control channels carrying retransmission scheduling information for Msg2 are the same, overlap, or partially overlap, adopting, by Msg2, the first processing manner.

14. The method of claim 1, wherein a processing manner adopted by Msg3 in the second random access procedure is determined by at least one of the following:
determining the processing manner for Msg3 according to a system load level;
being the same as a processing manner of a control channel carrying scheduling information for Msg3;
being the same as a processing manner of a control channel carrying retransmission scheduling information for Msg3;
indicated by a control channel carrying scheduling information for Msg3;
indicated by a control channel carrying retransmission scheduling information for Msg3;
when Msg3 resources indicated by a plurality of control channels carrying scheduling information for Msg3 are the same, overlap, or partially overlap, adopting, by Msg3, the first processing manner; or
when Msg3 resources indicated by a plurality of control channels carrying retransmission scheduling information for Msg3 are the same, overlap, or partially overlap, adopting, by Msg3, the first processing manner.

15. The method of claim 1, wherein a processing manner adopted by Msg4 in the second random access procedure is determined by at least one of the following:
determining the processing manner for Msg4 according to a system load level;
being the same as a processing manner of a control channel carrying scheduling information for Msg4;
being the same as a processing manner of a control channel carrying retransmission scheduling information for Msg4;
indicated by a control channel carrying scheduling information for Msg4;
indicated by a control channel carrying retransmission scheduling information for Msg4;
when Msg4 resources indicated by a plurality of control channels carrying scheduling information for Msg4 are the same, overlap, or partially overlap, adopting, by Msg4, the first processing manner; or
when Msg4 resources indicated by a plurality of control channels carrying retransmission scheduling information for Msg4 are the same, overlap, or partially overlap, adopting, by Msg4, the first processing manner.

16. The method of claim 1, wherein in the second random access procedure, among the at least one second type of message, a processing manner of a second type of message sent later or received later is the same as a processing manner of a second type of message sent earlier or received earlier;
wherein at least one second type of message in the second random access procedure comprises:
a first access message, Msg1;
a control channel carrying scheduling information for Msg2;
a control channel carrying retransmission scheduling information for Msg2;
a second access message, Msg2;
a control channel carrying scheduling information for Msg3;
a control channel carrying retransmission scheduling information for Msg3;
a third access message, Msg3;
a control channel carrying scheduling information for Msg4;
a control channel carrying retransmission scheduling information for Msg4; or
a fourth access message, Msg4.

17. A communication node, comprising a memory, a processor, and a computer program stored in the memory and executable by the processor, wherein when executed by the processor, the computer program causes the processor to perform the method of any one of claims 1 to 16.

18. A storage medium storing a computer program which, when executed by a processor, causes the processor to perform the method of any one of claims 1 to 16.
